(19) Europäisches Patentamt
European Patent Office
Office européen des brevets

(11) **EP 1 653 268 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(51) Int Cl.:
***G02B 21/06*** *(2006.01)*

(21) Anmeldenummer: **05019365.5**

(22) Anmeldetag: **06.09.2005**

(54) **Mikroskop mit Farblängsfehler verringernden Kollimator**

Microscope with chromatic aberration reducing collimator

Microscope avec collimateur destiné à la réduction d'aberrations chromatiques

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.10.2004 DE 102004052276**

(43) Veröffentlichungstag der Anmeldung:
**03.05.2006 Patentblatt 2006/18**

(60) Teilanmeldung:
**07022891.1**

(73) Patentinhaber: **CARL ZEISS JENA GmbH**
**07745 Jena (DE)**

(72) Erfinder: **Winterot, Johannes**
**07745 Jena (DE)**

(74) Vertreter: **Geyer, Fehners & Partner**
**Patentanwälte**
**Perhamerstraße 31**
**80687 München (DE)**

(56) Entgegenhaltungen:
**EP-A- 1 024 388         DE-A1- 10 217 544**
**US-A- 4 704 010         US-A1- 2003 165 024**

## Beschreibung

Die Erfindung betrifft ein Mikroskop, mit einer Optikeinheit und einem Kollimator.

Ein solches Mikroskop ist beispielsweise ein Laserscanningmikroskop. Bei einem Laserscanningmikroskop besteht häufig die Problematik, daß aufgrund der Farblängsfehlercharakteristik der Optikeinheit (des Objektivs) die. Anregung unerwünschterweise in verschiedenen Probentiefen erfolgt.

Aus der DE 102 17 544 A1 ist es bekannt, einen Kollimator mit mindestens zwei Linsen aus unterschiedlichen optischen Materialien aufzubauen, der dazu dient, den Farblängsfehler des Objektivs zu verringern. Da der Kollimator jedoch auch mindestens zwei Linsen aus unterschiedlichen optischen Materialien aufgebaut ist, ist seine Herstellung aufwendig und kostenintensiv.

Ausgehend hiervon ist es Aufgabe der Erfindung, ein Mikroskop mit einer Optikeinheit und einem Kollimator bereitzustellen, mit dem die eingangs beschriebenen Nachteile überwunden werden können.

Erfindungsgemäß wird die Aufgabe gelöst durch ein Mikroskop gemäß Anspruch 1.

Mit dem erfindungsgemäßen Mikroskop wird somit ein Kollimator bereitgestellt, der entweder ein divergierendes Strahlenbündel in ein paralleles Strahlenbündel oder paralleles Strahlenbündel in ein konvergierendes Strahlenbündel umwandelt und dabei dem umgewandelten Strahlenbündel entweder keinen Farblängsfehler oder einen solchen Farblängsfehler einprägt, der entgegen dem Farblängsfehler der Optikeinheit ist. Damit wird sichergestellt, daß der Kollimator den durch die Optikeinheit bedingten Farblängsfehler nicht verschlechtert. Bevorzugt wird durch den Kollimator der durch die Optikeinheit bedingte Farblängsfehler sogar verringert.

Der Kollimator des Mikroskops kann so ausgelegt werden, daß der durch den Kollimator bedingte Farblängsfehler monoton steigend (mit zunehmender Wellenlänge) oder auch monoton fallend (mit zunehmender Wellenlänge) ist. Dies wird z.B. allein dadurch erreicht, daß bei einem vorbestimmten Linsenmaterial die Linsenform geändert wird, wobei der Farblängsfehler monoton steigend ist, wenn die Linse als Zerstreuungslinse wirkt, und der Farblängsfehler monoton fallend ist, wenn die Linse als Sammellinse wirkt.

Das erfindungsgemäße Mikroskop kann insbesondere ein Laserscanningmikroskop sein. Dabei kann der Kollimator dazu dienen, ein aus einer kleinen (punktförmigen) Lichtquelle kommendes Strahlenbündel zu parallelisieren. In diesem Fall ist der Kollimator in der Anregungsseite des Mikroskops angeordnet. Alternativ ist es möglich, den Kollimator im Detektionsstrahlengang einzusetzen, um ein paralleles Strahlenbündel auf einen Punkt zu konvergieren. In diesem Fall kann der Kollimator als Pinholeoptik eingesetzt werden.

Durch die Verwendung des gekrümmten Spiegels im Kollimator kann die Anzahl der benötigten Linsen verringert werden. Insbesondere ist es möglich, eine einzige Linse einzusetzen und dabei die gewünschte Farblängsfehlercharakteristik des Kollimators einzustellen. Natürlich kann der Kollimator auch mehrere Linsen aufweisen. In diesem Fall ist es bevorzugt, daß alle Linsen aus dem gleichen Material hergestellt sind.

Das zugeführte Strahlenbündel kann Strahlung (bevorzugt Licht) einer vorbestimmten Wellenlänge mit einer gewissen Bandbreite aufweisen. In diesem Fall ist der Kollimator bevorzugt für diesen Wellenlängenbereich in der erfindungsgemäßen Art ausgebildet. Es ist jedoch auch möglich, daß das zugeführte Strahlenbündel Licht mit zwei oder mehreren unterschiedlichen Wellenlängen bzw. Wellenlängenbereichen enthält, die sich nicht überlappen, sondern die voneinander beabstandet sind. In diesem Fall kann die Farblängsfehlercharakteristik des Kollimators auf die verschiedenen Wellenlängenbereiche relativ zueinander bezogen sein.

Der Spiegel ist insbesondere konkav gekrümmt. Damit läßt sich die gewünschte Umwandlung des divergierenden Strahlenbündels in das parallele Bündel bzw. des parallelen Bündels in ein konvergierendes Strahlenbündel besonders leicht realisieren.

Der Spiegel kann als Rückflächenspiegel auf einer Seite der Linse ausgebildet sein. Dies bringt den Vorteil mit sich, daß der Spiegel nicht mehr relativ zur Linse justiert werden muß. Außerdem können typische Beläge für Rückflächenspiegel eingesetzt werden, und es wird eine Verschmutzung des Spiegels effektiv verhindert.

Der Kollimator des Mikroskops kann die Linse als einzige Linse und den Spiegel als einzigen Spiegel aufweisen. Damit läßt sich ein Kollimator mit der gewünschten Farblängsfehlercharakteristik mit einer äußerst geringen Anzahl von optischen Elementen realisieren.

Es ist bevorzugt, wenn beide Seiten der Linse als sphärische Flächen ausgebildet sind. Auch der Spiegel kann ein sphärischer Spiegel sein. Dies führt zu einer deutlichen Verringerung der Herstellungskosten des Kollimators, da sphärische Flächen leicht mit der gewünschten Genauigkeit herstellbar sind.

Eine bevorzugte Ausgestaltung des erfindungsgemäßen Mikroskops besteht darin, daß das zugeführte Strahlenbündel derart auf die Kollimatoroptik einfällt, daß der Hauptstrahl des Strahlenbündels mit der optischen Achse des Kollimators zusammenfällt. Somit wird das einfallende Strahlenbündel in sich zurück reflektiert. In diesem Fall lassen sich unerwünschte Abbildungsfehler der Kollimatoroptik minimieren.

Des weiteren kann dem Kollimator im Strahlengang ein Umlenkspiegel mit einem Durchgangsloch vor- oder nachgeordnet sein, wobei das Strahlenbündel, wenn es ein divergierendes Strahlenbündel ist, durch das Durchgangsloch läuft und auf den Kollimator trifft und das vom Kollimator kommende parallele Strahlenbündel am Umlenkspiegel umgelenkt wird, und wobei das Strahlenbündel, wenn es ein paralleles Strahlenbündel ist, am Umlerikspiegel zum Kollimator hin umgelenkt wird und auf den Kollimator trifft, und das vom Kollimator kommende konvergierende Strahlenbündel durch das Durchgangsloch hindurchläuft.

Bei dieser Ausgestaltung läßt sich der senkrechte Einfall des zugeführten Strahlenbündels auf den Kollimator besonders leicht realisieren.

Ferner kann bei dem erfindungsgemäßen Mikroskop der Kollimator als ein erster austauschbarer Kollimator ausgebildet sein, der durch einen zweiten Kollimator des Mikroskops ersetzt werden kann, wobei der zweite Kollimator für einen anderen Wellenlängenbereich als der erste Kollimator eine derartige Farblängsfehlercharakteristik aufweist, daß für den anderen Wellenlängenbereich der durch die Optikeinheit eingeprägte Farblängsfehler unverändert bleibt oder verringert wird.

Diese Variante mit den austauschbaren Kollimatoren ist von besonderem Vorteil, wenn das Mikroskop zeitlich nacheinander mit Strahlenbündel von unterschiedlichen Wellenlängen genutzt wird.

Eine weitere bevorzugte Ausgestaltung des erfindungsgemäßen Mikroskops besteht darin, daß der Kollimator den Spiegel sowie zwei oder drei Linsen umfaßt und die Linsen sowie der Spiegel entlang der optischen Achse des Kollimators verschiebbar sind, so daß eine gewünschte Farblängsfehlercharakteristik des Kollimators einstellbar ist. Damit kann selbst im Betrieb des Mikroskops je nach Anforderung die Farblängsfehlercharakteristik des Kollimators geändert und angepaßt werden. Insbesondere ist diese Anpassung so durchführbar, daß andere optische Parameter unverändert bleiben. Beispielsweise kann der Kollimator so ausgebildet sein, daß er eine konstante Brennweite aufweist.

Bevorzugt sind alle Linsen aus dem gleichen Material hergestellt. Dies verringert die Herstellungskosten und führt zu einem günstigen und doch sehr flexiblen Kollimator.

Wenn das Mikroskop als Laserscanningmikroskop ausgebildet ist, kann es noch eine Ablenk- bzw. Scaneinheit aufweisen, die zwischen dem Kollimator und der Optikeinheit angeordnet ist.

Das Mikroskop kann als Laserscanningmikroskop ausgebildet sein, wobei der Kollimator im Anregungs- und/ oder Detektionsstrahlengang angeordnet ist.

Die Erfindung wird nachfolgend anhand der Zeichnungen beispielshalber noch näher erläutert.
Es zeigen:

Fig. 1    eine schematische Ansicht einer Ausführungsform des erfindungsgemäßen mikroskops;
Fig. 2    ein Diagramm zur Darstellung des Farblängsfehlers des Kollimators des Mikroskops von Fig. 1;
Fig. 3    ein Diagramm, das den Farblängsfehler des gesamten Mikroskops von Fig. 1 zeigt;
Fig. 4    einen Kollimator gemäß einer zweiten Ausführungsform;
Fig. 5    ein Diagramm, aus dem die einzustellenden Linsen- und Spiegelpositionen für die gewünschte Farblängsfehlercharakteristik entnehmbar sind;
Fig. 6    einen Kollimator gemäß einer weiteren Ausführungsform;
Fig. 7    ein Diagramm, aus die einzustellenden Linsenpositionen des Kollimators von Fig. 6 in Abhängigkeit der gewünschten Farblängsfehlercharakteristik entnehmbar sind, und

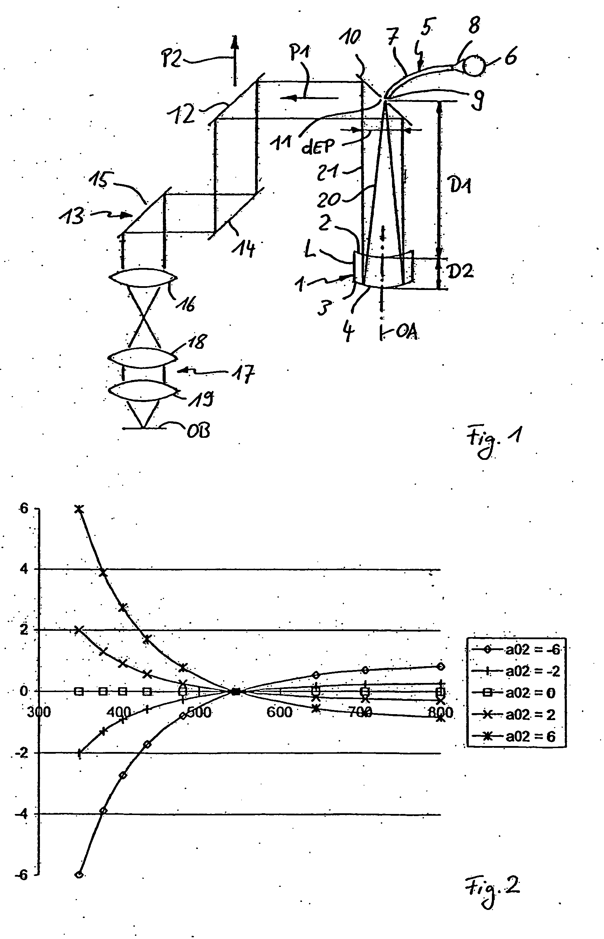

Bei der in Fig. **1** gezeigten Ausführungsform ist das erfindungsgemäße Mikroskop als Laserscanningmikroskop ausgebildet, das einen Kollimator **1** aufweist, der eine Einzellinse **L** mit einer konkaven Seite **2** und einer konvexen Seite **3** enthält, wobei die konvexe Seite **3** verspiegelt ist, so daß auf ihr ein Rückflächenspiegel **4** ausgebildet ist.

Das Laserscanningmikroskop enthält ferner eine Lichtquelle **5,** die eine Lichtquelleneinheit **6** und eine Monomodefaser **7** umfaßt, wobei das Licht der Lichtquelleneinheit **6** über ein Ende der Monomodefaser **7** in diese eingekoppelt und an dem anderen Ende **9** ausgekoppelt wird. Das Ende 9 bildet somit eine Punktlichtquelle und ist so hinter einem Umlenkspiegel **10** angeordnet, daß es das Licht direkt in ein Durchgangsloch **11** des Umlenkspiegels **10** abgibt. Natürlich kann am Ort des Faseraustritts z.B. der Brennpunkt einer Fokusoptik (nicht gezeigt) sein.

Das Laserscanningmikroskop enthält ferner einen Hauptfarbteiler **12**, eine Ablenkeinheit **13**, die zwei Ablenkspiegel **14** und **15** sowie eine Scanneroptik **16** aufweist, und eine Mikroskopoptik **17**, die eine Tubuslinse **18** und ein Objektiv **19** umfaßt. Statt der zwei Ablenkspiegel **14** und **15** kann die Ablenkeinheit **13** natürlich auch nur einen einzigen Ablenkspiegel (nicht gezeigt) enthalten, der z.B. um zwei Achsen schwenkbar ist.

Im Betrieb tritt aus dem Ende **9** der Faser **7** ein divergierendes Beleuchtungsstrahlenbündel **20** aus, wobei der Hauptstrahl des divergierenden Beleuchtungsstrahlenbündels **20** mit der optischen Achse OA des Kollimators (bzw. der Kollimationsoptik) **1** zusammenfällt, und trifft auf die Kollimationsoptik **1,** die das Beleuchtungsstrahlenbündel **20** in ein Parallelbündel **21** umformt, das auf den Umlenkspiegel **10** trifft und von diesem zum Hauptfarbteiler **12** reflektiert wird, wie es durch den Pfeil P1 angedeutet ist. Das Parallelbündel **21** wird dann über den Hauptfarbteiler **12,** die Ablenkeinheit **13** und die Mikroskopoptik **17** in bekannter Art auf das zu untersuchende Objekt OB fokussiert und bewegt, um beispielsweise Fluoreszenz anzuregen. Das Fluoreszenzlicht durchläuft die Mikroskopoptik **17**, die Ablenkeinheit **13** und wird dann vom Hauptfarbteiler **12** in einen Detektionsstrahlengang geleitet, wie es durch den Pfeil P2 angedeutet ist. Im Detektionsstrahlengang wird das Fluoreszenzlicht in bekannter Weise analysiert.

Die Kollimationsoptik **1** ist so ausgelegt, daß ihr Farblängsfehler für das Licht der Lichtquelle **5** den Farblängsfehler der Mikroskopoptik **17** verringert. Bei dem Licht der Lichtquelle **5** kann es sich beispielsweise um Licht mit der Wellenlänge 565 nm $\pm$ 15 nm handeln. In diesem Fall ist die Kollimationsoptik **1** für diesen Wellenlängenbereich so ausgelegt, daß der Farblängsfehler der Mikroskopoptik **17** in diesem Wellenlängenbereich verringert ist.

In Fig. **2** ist die Farblängsfehlercharakteristik für fünf Varianten der erfindungsgemäßen Kollimationsoptik **1** dargestellt. Entlang der Abszisse ist die Wellenlänge $\lambda$ in nm und entlang der Ordinate ist der Farblängsfehler a02($\lambda$) als Wellenflächendeformation in Teilen von $\lambda$ dargestellt, wobei mit s($\lambda$) = **1,1** * $\lambda$ * a02($\lambda$)/nA$^2$ die physikalische Schnitt-weite berechenbar ist. $\Delta$s = s($\lambda$) - s(546 nm) beschreibt eine Schnittweitendifferenz für die Wellenlänge $\lambda$, und nA ist die numerische Apertur, die hier als $\dfrac{1}{2} \cdot \dfrac{dEP}{f}$ definiert ist (dEP ist der Durchmesser der Eintrittspupille, hier dEP = 3,2 mm, und f ist die Brennweite des Kollimators). Der Wert von a02($\lambda$) für $\lambda$ = 350 nm wird hier einfach als a02 bezeichnet und dient als Parameter zur Unterscheidung von unterschiedlichen Farblängsfehlercharakteristiken des Kollimators.
Die Linie a02 = -2 zeigt die Farblängsfehlercharakteristik des Kollimators **1** von Fig. **1,** der als rückflächenverspiegelte Einzellinse mit folgenden Parametern ausgebildet ist:

    Krümmungsradius der konkaven Vorderseite 2: 54,13 mm
    Krümmungsradius der konvexen Rückseite 3: 42,34 mm
    Dicke D2 der Linse: 3,71 mm
    Abstand D1 der vorderen Seite 2 von der Punktlichtquelle: 17,14 mm
    Materialparameter: $n_e$ = 1,58481, $v_e$ = 40,57
    Brennweite f: 20 mm

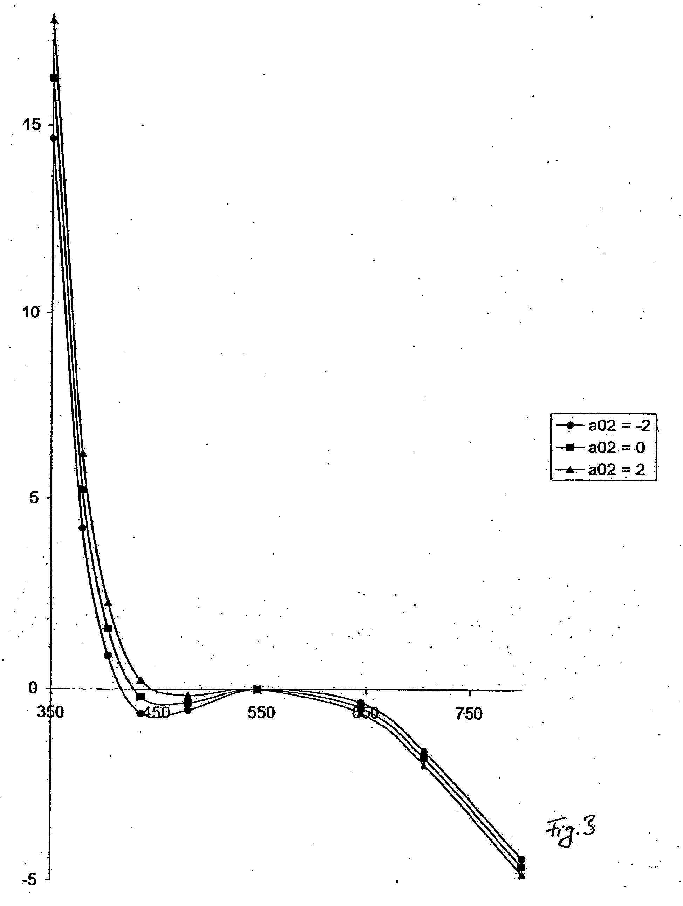

Die Farblängsfehlercharakteristik der Mikroskopoptik **17** (Kurve a02 = 0) alleine und in Kombination mit dem Kollimator **1** (Kurve a02 = -2) sind in Fig. **3** gezeigt, wobei hier wiederum entlang der Abszisse die Wellenlänge $\lambda$ in nm und entlang der Ordinate der Farblängsfehler a02($\lambda$) in mm aufgetragen ist.
Wie dem Vergleich der Kurven a02 = 0 und a02 = -2 in Fig. **3** zu entnehmen ist, ist der Farblängsfehler der Mikroskopoptik 17 im Bereich von größer als 550 nm monoton fallend (Kurve a02 = 0 in Fig. **3**) und kann daher durch den in diesem Bereich entgegengesetzt verlaufenden Farblängsfehler des Kollimators **1** (Kurve a02 = -2 in Fig. **2**) ausgezeichnet kompensiert werden (Kurve a02 = -2 in Fig. **3**). Der Farblängsfehler im Bereich von 550 bis 600 nm ist praktisch 0 und somit fast vollständig aufgehoben. Das Laserscanningmikroskop ist daher in diesem Wellenlängenbereich auf der Anregungsseite achromatisiert. Ferner ist der Farblängsfehler im Bereich von 600 bis 650 nm maximal nur noch halb so groß im Vergleich zur Farblängsfehlercharakteristik der Mikroskopoptik **17** alleine (Kurve a02 = 0).
In Fig. **2** ist noch die Farblängsfehlercharakteristik von Abwandlungen des Kollimators von Fig. **1** eingezeichnet, wobei jedoch der grundsätzliche Aufbau als rückflächenverspiegelte Kohkav-Konvex-Einzellinse beibehalten wird und auch das gleiche Linsenmaterial eingesetzt wird. Lediglich die Krümmungsradien sowie die Linsendicke und der Abstand D1 sind variiert.
In der nachfolgenden Tabelle sind die entsprechenden Krümmungsradien und Abstände angegeben, wobei die Brennweite **f** des Kollimators **1** von Fig. **1** sowie die der Abwandlungen gemäß der nachfolgenden Tabelle jeweils 20 mm beträgt.

| Kurve a02 = | Krümmungsradius Vorderseite 2 [mm] | Krümmungsradius Rückseite 3. [mm] | D2 [mm] | D1 [mm] |
|---|---|---|---|---|
| -6 | 177,95 | 56,89 | 3,74 | 17,66 |
| 0 | 40,21 | 42,34 | 3,71 | 17,74 |
| +2 | 31,98 | 39,31 | 4,00 | 17,59 |
| +6 | 22,66 | 34,29 | 4,05 | 17,60 |

Wie der Darstellung in Fig. **2** klar zu entnehmen ist, läßt sich somit die Farblängsfehlercharakteristik von monoton fallend mit zunehmender Wellenlänge (a02 = 6 oder 2) über unabhängig von der Wellenlänge (a02 = 0) bis zu monoton steigend mit zunehmender Wellenlänge (a02 = -6 oder -2) nur durch die Wahl der Krümmungsradien und Abstände, bzw. nur durch Änderung der geometrischen Abmessungen, ohne das Material zu ändern, einstellen. Dadurch kann die gewünschte optimale Korrektur der Mikroskopoptik 17 für den entsprechenden Anwendungsfall (also für die entsprechenden Wellenlängen) eingestellt werden.
In Fig. 3 ist noch die Farblängsfehlercharakteristik der Mikroskopoptik **17** in Verbindung mit einem Kollimator **1** mit a02 = 2 gezeigt. In diesem Fall wird eine ausgezeichnete Verringerung des Farblängsfehlers im Wellenlängenbereich von 450 - 550 nm erzielt.

Der Kollimator **1** von Fig. **1** sowie die in Fig. **2** gezeigten Abwandlungen genügen alle der folgenden Bedingung:

$$\left| 1/R2 - (a02 * (b2/f^2 + b1/f + b0) + c2/f^2 + c1/f + c0) \right| < 0,0003$$

Dabei steht R2 für den Krümmungsradius der Rückseite **3** und **f** für die Brennweite des Kollimators **1**; und die Konstanten c0, c1, c2, b0, b1, b2 weisen folgende Werte auf:

$$b0 = -0,0010395 \qquad c0 = 0,00068469$$
$$b1 = -0,003737 \qquad c1 = -0,570058.$$
$$b2 = 0,0844626 \qquad c2 = 1,679172$$

Aus der obigen Bedingung kann R2 und damit der Krümmungsradius des Spiegels **4** festgelegt werden. Der Kollimator kann mit unterschiedlichen Brennweiten ausgelegt werden. Es können Brennweiten eingestellt werden, die die folgende Ungleichung erfüllen: 0,002<1/f<0,1.

Die obige Bedingung kann aus der numerischen Analyse des designten Kollimators bzw. Optiksystems in Abhängigkeit vorgegebener Randbedingungen (z.B. Brennweite des Kollimators, Linsenmaterial, ...) hergeleitet werden.

Ferner ist es beim erfindungsgemäßen Mikroskop möglich, den Abstand D1 zu ändern. Dies kann insbesondere dadurch durchgeführt werden, daß die Kollimationsoptik **1** entlang der optischen Achse OA bewegt wird. Eine Vergrößerung des Abstandes D1 bewirkt in dem Diagramm von Fig. **2** eine Verschiebung der entsprechenden Kurve entlang der Ordinate hin zu kleineren Werten. Entsprechend führt eine Verkleinerung des Abstands D1 zu einer Verschiebung der Kurve nach oben.

Natürlich ist es auch möglich, den Spiegel **4** als separaten Spiegel auszubilden. Auch kann die Kollimationsoptik **1** ein Gitter aufweisen, das beispielsweise auf der vorderen Seite **2,** der hinteren Seite **3** oder auf der Spiegelfläche **4** ausgebildet ist.

Wenn beim erfindungsgemäßen Mikroskop das zugeführte Licht unterschiedliche Wellenlängenbereiche enthält (z.B. 500 nm $\pm$ 15 nm und 430 nm + 15 nm), kann die Kollimatoroptik **1** so ausgebildet sein, daß ihr Farblängsfehler bezüglich der beiden Wellenlängenbereiche den entsprechenden Farblängsfehler der Mikroskopoptik kompensiert oder zumindest verringert.

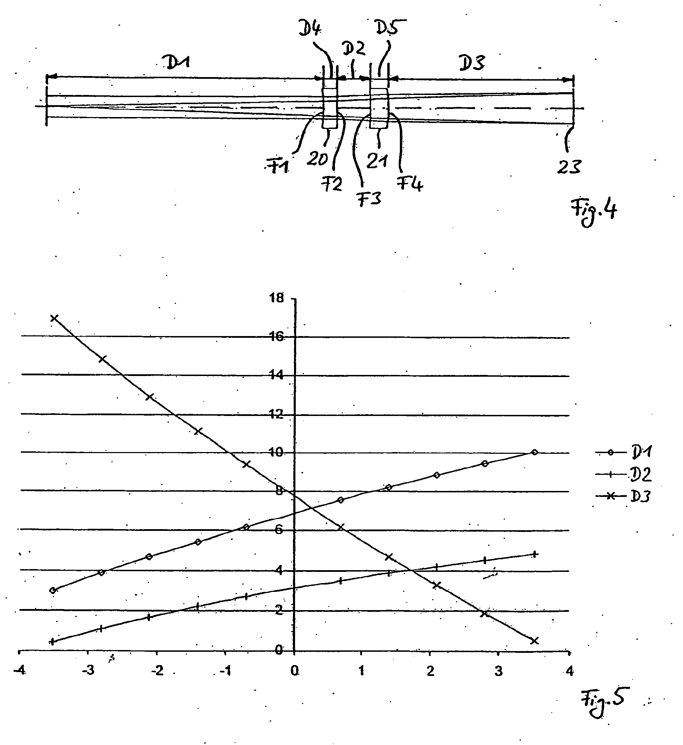

In Fig. 4 ist eine weitere Abwandlung des Kollimators **1** eingezeichnet. Bei dieser Ausführungsform umfaßt der Kollimator **1.** zwei Konkav-Konvex-Linsen **20, 21** sowie einen Konkavspiegel **23**. Die Linsen **20** und **21** sowie der Spiegel **23** sind entlang der optischen Achse bewegbar, so daß deren Abstände veränderbar sind. Dadurch läßt sich beispielsweise bei konstanter Brennweite **f** des Kollimators **1** in Fig. 4 der Farblängsfehler des Mikroskops (also von Mikroskopoptik **17** und Kollimator **1**) von unterkompensiert (der Farblängsfehler der Mikroskopoptik **17** wird nicht vollständig kompensiert) kontinuierlich bis zu überkompensiert (der Farblängsfehler des Kollimators **1** ist so groß, daß der Farblängsfehler der Mikroskopoptik **17** zwar kompensiert wird, aber nun das Mikroskop einen durch den Kollimator **1** bedingten Farblängsfehler aufweist) durchstimmen.

In der Ausführungsform in Fig. 4 sind die Linsen **20** und **21** aus dem gleichen Material und weisen eine Abbezahl von 36,16 auf. Der Abstand von der Eintrittspupille des Kollimators **1** bis zur konkaven Seite der Linse **20** beträgt D1, der Abstand zwischen den beiden einander zugewandten Seiten der Linsen **20** und **21** beträgt D2 und der Abstand von der konvexen Seite der Linse **21** zum Spiegel **23** beträgt D3. Die Dicke der Linsen **20** und **21** beträgt D4 und D5. Die Brennweite **f** beträgt 20 mm. Für diesen Fall lassen sich die Krümmung des Spiegels **23,** die Brechkraft der Linsen **20** und **21** und die Bewegungsdynamik (also die Variation der Abstände D1, D2 und D3) als Funktion der Brennweite des Systems wie folgt beschreiben, wobei durch Wahl von zwei der drei Abstände D1, D2 und D3 die Fokussierung und Einstellung der Brennweite bewirkt wird und mittels der Wahl der Größe des dritten Abstands (hier D3) die Farblängsfehlercharakteristik festgelegt werden kann:

$$\left| 1/R + 0,4088/f + 0,0023 \right| < 0,001$$

$$\left| f1 + 0,0669 * f + 28,788 \right| < 0,05 * f$$

$$|f2 - 0,0271 * f - 57,22| < 0,05 * f$$

$$|D3(\Delta s(= 0)) - D3(\Delta s(< 0)) - 0,4179 * f + 1,4475| < 0,02 * f$$

$$|D3(\Delta s(> 0)) - D3(\Delta s(< 0)) - 0,731 * f - 2,867| < 0,02 * f$$

R ist der Krümmungsradius des Spiegels **23,** und f1 sowie f2 sind die Brennweiten der Linsen **20** bzw. **21.** $\Delta s$ (<0) steht für ein $\Delta s$, dessen Wert kleiner 0 ist $\Delta s$(=0) steht für ein $\Delta s$, dessen Wert 0 ist, und $\Delta s$(>0) steht für ein $\Delta s$, dessen Wert größer als 0 ist. In dem hier beschriebenen Ausführungsbeispiel wird für $\Delta s$(<0) ein Wert a02 von etwa -3,5 und für $\Delta s$(>0) ein Wert a02 von etwa +3,5 erreicht.

Die genauen Parameter des Kollimators **1** von Fig. 4 sind wie folgt:

Krümmungsradius der konkaven Fläche F1: 13,10
Krümmungsradius der konvexen Fläche F2: 48,39
Krümmungsradius der konkaven Fläche F3:18,44
Krümmungsradius der konvexen Fläche F4: 12,78
Krümmungsradius des konkaven Spiegels 23: 43,99
D4 = 2,00
D5 = 2,00.

|  | $\Delta s(<0)$ | $\Delta s(=0)$ | $\Delta s(>0)$ |
|---|---|---|---|
| D1 | 14,05 | 6,93 | 3,12 |
| D2 | 4,83 | 3,12 | 0,55 |
| D3 | 0,50 | 7,68 | 16,57 |

In der obigen Tabelle sind spezielle Werte für $\Delta s$ angegeben. In Fig. 5 ist die Abhängigkeit der Farblängsfehlercharakteristik.von den Abständen D1, D2 und D3 graphisch so dargestellt, daß entlang der Abszisse der Wert für a02 angegeben ist und entlang der Ordinate die Größe des entsprechenden Abstandes in mm angegeben ist. Jedem einzelnen Wert des Parameters a02 sind wiederum Farblängsfehlercharakteristiken zugeordnet, die hier zwar nicht gezeigt sind, aber qualitativ den in Fig. 2 dargestellten entsprechen. Somit kann man in Abhängigkeit der gewünschten Farblängsfehlercharakteristik aus der Darstellung von Fig. 5 dann die einzustellenden Abstände D1-D3 entnehmen. Für die Werte a02 von -3,5, 3,5 und 0 sind die entsprechenden Abstände in der obigen Tabelle angegeben.

Der Kollimator **4** kann für Brennweiten f ausgelegt werden, die die folgende Ungleichung erfüllen: 0,002<1/f<0,1. Die Abbezahl der Linsen **20** und **21** sind bevorzugt kleiner als **60,** vorzugsweise kleiner als **40.** Insgesamt weist der Kollimator **1** von Fig. 4 eine Linse **20** negativer Brechkraft und einer niedrigen Abbezahl, eine Linse **21** positiver Brechkraft und ebenfalls niedriger Abbezahl sowie einen Spiegel **23** positiver Brechkraft auf. Durch Einstellen der Abstände D1-D3 kann die gewünschte Farblängsfehlercharakteristik eingestellt und verändert werden, wobei die Brennweite des Gesamtsystems konstant bleibt.

Insbesondere kann der Kollimator **1** von Fig. 4 noch Stellelemente für die Linsen **20** und **21** und den Spiegel **23** umfassen, so daß die Änderung der Farblängsfehlercharakteristik automatisch durchführbar ist.

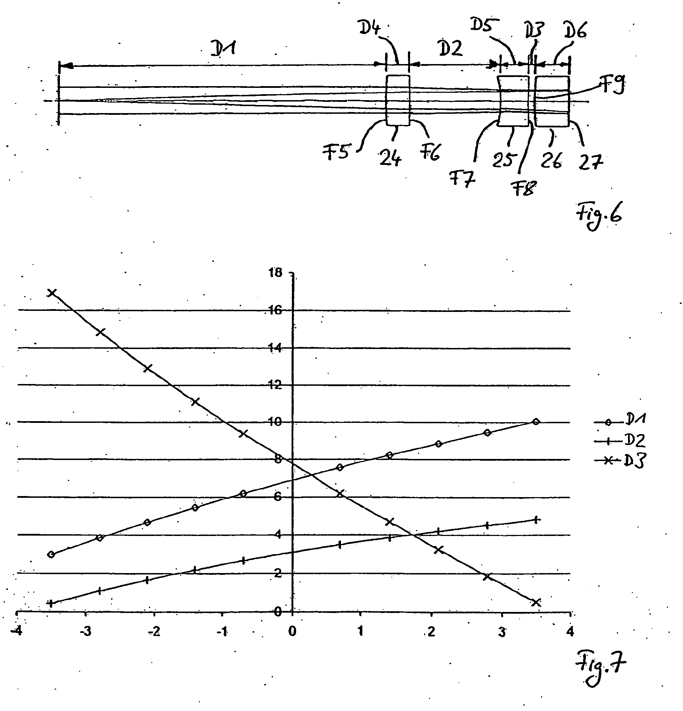

In Fig. 6 ist ein Kollimator 1 gezeigt, der eine Linse **24** positiver Brechkraft, eine Linse **25** negativer Brechkraft und einer Spiegellinse **26** positiver Brechkraft aufweist. Die Linsen weisen jeweils eine niedrige Abbezahl auf, beispielsweise kleiner als 60, vorzugsweise kleiner als **40.** In dem hier beschriebenen konkreten Ausführungsbeispiel beträgt die Abbezähl **36,16.** Auch der Kollimator in Fig. 6 ist so ausgelegt, daß bei konstanter Brennweite des Gesamtsystems sich der Farblängsfehler von überkorrigiert bis zu unterkorrigiert kontinuierlich durchstimmen läßt. Der Abstand der Eintrittspupille bis zur Fläche F5 der Linse **25** beträgt D1, der Abstand der einander zugewandten Flächen F6 und F7 der Linsen **24** und **25** beträgt D2 und der Abstand der Flächen F8 und F9 der Linsen 25 und 26 beträgt D3. Die Linsen **24, 25** und **26** weisen eine Dicke D4, D5 bzw. D6 auf.

Der Kollimator von Fig. 6 ist so ausgelegt, daß folgende Bedingungen erfüllt sind:

$$\left| 1/R6 + 0,3143/f + 0,0088 \right| < 0,001$$

$$\left| f1 - 0,1175*f - 45,775 \right| < 0,1*f$$

$$\left| f2 + 0,0133*f + 14,621 \right| < 0,1*f$$

$$\left| f3 - 0,0286*f - 9,6999 \right| < 0,1*f$$

$$\left| D2(\Delta s(=0)) - D2(\Delta s(<0)) - 0,0004*f^2 + 0,2172*f - 1,6243 \right| < 0,01*f$$

$$\left| D2(\Delta s(>0)) - D2(\Delta s(<0)) - 0,0011*f^2 + 0,4239*f - 2,7441 \right| < 0,01*f$$

Auch in diesem Ausführungsbeispiel wird für $\Delta s(<0)$ ein Wert a02 von etwa -3,5 und für $\Delta s(>0)$ ein Wert a02 von etwa 3,5 erreicht. Die genauen Krümmungen der Linsenflächen sind wie folgt:

Krümmungsradius der konvexen Fläche F5: 71,76 mm,
Krümmungsradius der konkaven Fläche F6: 51,07 mm,
Krümmungsradius der konkaven Fläche F7: 8,90 mm,
Krümmungsradius der konkaven Fläche F8: 254,88 mm,
Krümmungsradius der konvexen Fläche F9: 49,08 mm,
Krümmungsradius der konvexen Fläche F10: 40,94 mm,
D4 = 2,00,
D5 = 5,52 und
D6 = 4,00.

|    | $\Delta s(<0)$ | $\Delta s(=0)$ | $\Delta s(>0)$ |
|----|------|------|-------|
| D1 | 4,50 | 8,91 | 12,95 |
| D2 | 5,51 | 3,10 | 0,61 |
| D3 | 2,22 | 1.51 | 0,88 |

Die Abhängigkeit der Farblängsfehlercharakteristik von den einzelnen Abständen D1-D3 ist in der Graphik von Fig. 7 dargestellt, wobei die Darstellung der von Fig. 5 entspricht. Für einen gewünschten Farblängsfehler a02 kann man anhand der Darstellung von Fig. 7 die Abstände D1-D3 ermitteln.

Von besonderem Vorteil ist bei den beschriebenen Ausführungsformen, daß alle gekrümmten Linsen- bzw. Spiegelflächen als sphärische Flächen ausgebildet werden können.

Die für die Ausführungsformen von Fig. 4 und 6 angegebenen Bedingungen sind für einen Fachmann durch numerische Analysen von Berechnungen der optischen Eigenschaften der jeweiligen Kollimatoren herleitbar.

Der Lichtweg in den obigen Kollimatoren ist umkehrbar, so daß ein aus der Fokusebene (hier z.B. Durchgangsloch 11 im Umlenkspiegel 10) austretendes, divergierendes Lichtbündel durch den Kollimator in ein paralleles Lichtbündel umgewandelt und ein paralleles Lichtbündel in ein konvergierendes Lichtbündel umgewandelt wird, das in die Fokusebene fokussiert wird.

**Patentansprüche**

1. Mikroskop mit einer Optikeinheit (17) und einem Kollimator (1), der in einem Strahlengang des Mikroskops der Optikeinheit (17) vor- oder nachgeordnet ist, wobei die Optikeinheit (17) einem dem Strahlengang zugeführten Strahlenbündel einen vorbestimmten Farblängsfehler einprägt und das Strahlenbündel auf den Kollimator (1) als divergierendes oder paralleles Strahlenbündel trifft und von diesem in ein paralleles oder konvergierende Strahlenbündel umgewandelt wird wobei die Farblängsfehlercharakteristik des Kollimators (1) so ausgelegt ist, daß der durch die Optikeinheit (17) dem Strahlenbündel eingeprägte Farblängsfehler unverändert bleibt oder verringert wird, **dadurch gekennzeichnet daß** der Kollimator (1) zumindest eine Linse (L) sowie einen gekrümmten Spiegel (4) aufweist, der den Strahlengang so faltet, daß das zugeführte Strahlenbündel die Linse (4) zweimal durchläuft.

2. Mikroskop nach Anspruch 1, bei dem der Spiegel (4) als Rückflächenspiegel auf einer Seite der Linse (L) ausgebildet ist.

3. Mikroskop nach einem der obigen Ansprüche, bei dem der Kollimator (1) die Linse (L) als einzige Linse und den Spiegel (4) als einzigen Spiegel aufweist.

4. Mikroskop nach einem der obigen Anspruche; bei dem beide Seiten (2, 3) der Linse (L) als sphärische Flächen ausgebildet sind.

5. Mikroskop nach einem der obigen Ansprüche, bei dem das Strahlenbündel (20) derart auf den Kollimator (1) fällt, daß der Hauptstrahl des Strahlenbündels (20) mit de optischen Achse (OA) des Kollimators (1) zusammenfallt.

6. Mikroskop nach Anspruch 5, bei dem dem Kollimator (1) im Strahlengang ein Umlenkspiegel (10) mit einem Durchgangsloch (11) vor- oder nachgeordnet ist, wobei das Strahlenbündel (20), wenn es ein divergierendes Strahlenbündel ist, durch das Durchgangsloch (11) läuft und auf den Kollimator (1) trifft und das vom Kollimator kommende Parallelbündel (21) am Umlenkspiegel (10) umgelenkt wird, und wobei das Strahlenbündel, wenn es ein paralleles Strahlenbündel ist, am Umlenkspiegel (10) zum Kollimator (1) hin umgelenkt wird und auf den Kollimator trifft und das vom Kollimator kommende konvergierende Strahlenbündel durch das Durchgangsloch (11) hindurchläuft.

7. Mikroskop nach einem der obigen Ansprüche, bei dem der Kollimator (1) als ein erster austauschbarer Kollimator ausgebildet ist, der durch einen zweiten Kollimator ersetzt werden kann, wobei der zweite Kollimator für einen anderen Wellenlängenbereich als der erste Kollimator eine derartige farblängsfehlercharakteristik aufweist, daß für den anderen Wellenlängenbereich der durch die Optikeinheit (17) eingeprägte Farblängsfehler unverändert bleibt oder verringert wird.

8. Mikroskop nach einem der obigen Ansprüche, bei dem der Kollimator (1) den Spiegel (23; 27) sowie zwei oder drei Linsen (20, 21; 24, 25, 26) umfaßt und die Linsen (20, 21; 24, 25, 26) sowie der Spiegel (23; 27) entlang der optischen Achse (OA) des Kollimators (1) verschiebbar sind, so daß eine gewünschte Farblängsfählerchaqaktefistik des Kollimators (1) einstellbar ist.

9. Mikroskop nach Anspruch 8, bei dem alle Linsen (20, 21; 24, 25, 26) aus dem gleichen Material hergestellt sind.

10. Mikroskop nach einem der obigen Ansprüche, bei dem das Mikroskop ein Laserscanningmikroskop ist und der Kollimator im Anregungs- und/oder Detektionsstrahlengang zur Anwendung kommt.

**Claims**

1. A microscope comprising an optical unit (17) and a collimator (1), which collimator (1) is arranged preceding or following the optical unit (17) in a beam path of the microscope, said optical unit (17) imposing a predetermined longitudinal chromatic aberration on a beam supplied to said beam path and said beam impinging on the collimator (1) as a diverging beam or a parallel beam and being converted by said collimator into a parallel beam or a converging beam, wherein the longitudinal chromatic aberration characteristic of the collimator (1) is designed such that the longitudinal chromatic aberration imposed on the beam by the optical unit (17) remains unchanged or is reduced, **characterized in that** the collimator (1) comprises at least one lens (L) as well as a curved mirror (4) which folds the beam path such that the supplied beam passes twice through the lens (4).

**2.** Microscope according to claim 1, wherein the mirror (4) is provided as a rear-surface mirror on one side of the lens (L).

**3.** Microscope according to any one of the above claims, wherein the collimator (1) comprises the lens (L) as the only lens and the mirror (4) as the only mirror.

**4.** Microscope according to any one of the above claims, wherein both sides (2, 3) of the lens (L) are provided as spherical surfaces.

**5.** Microscope according to any one of the above claims, wherein the beam (20) impinges on the collimator (1) such that the main ray of the beam (20) coincides with the optical axis (OA) of the collimator (1).

**6.** Microscope according to claim 5, wherein a deflecting mirror (10) comprising a through hole (11) is arranged preceding or following the collimator (1) in the beam path, wherein said beam (20), if it is a diverging beam, passes through the through hole (11) and impinges on the collimator (1), and the parallel beam (21) coming from the collimator is deflected by the deflecting mirror (10), and wherein the beam, if it is a parallel beam, is deflected by the deflecting mirror (10) to the collimator (1) and impinges on the collimator, and the converging beam coming from the collimator passes through the through hole.

**7.** Microscope according to any one of the above claims, wherein the collimator (1) is provided as a first exchangeable collimator, which may be replaced with a second collimator, said second collimator having a longitudinal chromatic aberration characteristic for a different wavelength region than the first collimator such that, for the other wavelength region, the longitudinal chromatic aberration imposed by the optical unit (17) remains unchanged or is reduced.

**8.** Microscope according to any one of the above claims, wherein the collimator (1) comprises the mirror (23; 27) as well as two or three lenses (20, 21; 24, 25, 26), and the lenses (20, 21; 24, 25, 26) as well as the mirror (23; 27) are displaceable along the optical axis (OA) of the collimator (1) so as to allow adjustment of a desired longitudinal chromatic aberration characteristic of the collimator (1).

**9.** Microscope according to claim 8, wherein all lenses (20, 21; 24, 25, 26) are produced from the same material.

**10.** Microscope according to any one of the above claims, wherein the microscope is a laser-scanning microscope and the collimator is used in the excitation beam path and/or detection beam path.

**Revendications**

**1.** Microscope avec une unité d'optique (17) et un collimateur (1), qui est placé en amont ou en aval de l'unité d'optique (17) dans une trajectoire de rayon du microscope, l'unité d'optique (17) appliquant une aberration chromatique longitudinale prédéfinie à un faisceau de rayons amené à la trajectoire de rayon et le faisceau de rayons arrivant sur le collimateur (1) sous forme de faisceau de rayons divergent ou parallèle et étant transformé par celui-ci en un faisceau de rayons parallèle ou convergent, la caractéristique d'aberration chromatique longitudinale du collimateur (1) étant dimensionnée de telle sorte que l'aberration chromatique longitudinale appliquée par l'unité d'optique (17) au faisceau reste inchangée ou est réduite, **caractérisé en ce que** le collimateur (1) présente au moins une lentille (L) ou un miroir (4) incurvé, qui plie la trajectoire de rayon, de telle sorte que le faisceau de rayons amené traverse deux fois la lentille (4).

**2.** Microscope selon la revendication 1, sur lequel le miroir (4) est conçu comme miroir de face arrière sur un côté de la lentille (L).

**3.** Microscope selon l'une quelconque des revendications précédentes, sur lequel le collimateur (1) présente la lentille (L) comme lentille unique et le miroir (4) comme miroir unique.

**4.** Microscope selon l'une quelconque des revendications précédentes, sur lequel les deux côtés (2, 3) de la lentille (L) sont conçus comme des surfaces sphériques.

**5.** Microscope selon l'une quelconque des revendications précédentes, sur lequel le faisceau de rayons (20) arrive sur le collimateur (1) de telle sorte que le rayon principal du faisceau de rayons (20) coïncide avec l'axe (OA) optique du collimateur (1).

**6.** Microscope selon la revendication 5, sur lequel un miroir de déviation (10) avec un trou de passage (11) est placé en amont ou en aval du collimateur (1) dans la trajectoire de faisceau, le faisceau de rayons (20) traversant le trou de passage (11), lorsqu'il s'agit d'un faisceau de rayons divergent et arrivant sur le collimateur (1) et le faisceau parallèle (21) venant du collimateur étant dévié sur le miroir de déviation (10), et le faisceau de rayons étant dévié sur le miroir de déviation (10) arrivant sur le collimateur (1) lorsqu'il s'agit d'un faisceau de rayons parallèle et arrivant sur le collimateur et le faisceau de rayons convergent venant du collimateur traversant le trou de passage (11).

**7.** Microscope selon l'une quelconque des revendications précédentes, sur lequel le collimateur (1) est conçu sous forme d'un premier collimateur interchangeable, qui peut être remplacé par un second collimateur, le second collimateur présentant pour une plage de longueurs d'onde autre que le premier collimateur une caractéristique d'aberration chromatique longitudinale telle que l'aberration chromatique longitudinale appliquée par l'unité d'optique (17) reste inchangée ou est réduite pour l'autre plage de longueurs d'onde.

**8.** Microscope selon l'une quelconque des revendications précédentes, sur lequel le collimateur (1) comprend le miroir (23, 27) ainsi que deux ou trois lentilles (20, 21 ; 24, 25, 26) et les lentilles (20, 21 ; 24, 25, 26) et le miroir (23, 27) peuvent être déplacés le long de l'axe optique (OA) du collimateur (1), de telle sorte qu'une caractéristique d'aberration chromatique longitudinale souhaitée du collimateur (1) peut être réglée.

**9.** Microscope selon la revendication 8, sur lequel toutes les lentilles (20, 21 ; 24, 25, 26) sont fabriquées dans le même matériau.

**10.** Microscope selon l'une quelconque des revendications précédentes, sur lequel le microscope est un microscope à balayage laser et le collimateur est utilisé dans la trajectoire du faisceau d'excitation et/ou la trajectoire de faisceau de détection.

Fig. 1

Fig. 2

Fig. 3

Fig.4

Fig.5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10217544 A1